# EUROPÄISCHE PATENTSCHRIFT

(11) **EP 2 324 743 B1**
(45) Veröffentlichungstag und Bekanntmachung des Hinweises auf die Patenterteilung: **23.01.2013**
(21) Anmeldenummer: 10450172.1
(22) Anmeldetag: 08.11.2010
(51) Int. Cl.: A47J 47/00

(54) **Zusatzarbeitsplatte**
Add-on work board
Plaque de travail auxiliaire

(30) Priorität: 17.11.2009 AT 18142009
(43) Veröffentlichungstag der Anmeldung: 25.05.2011
(73) Patentinhaber: Kruschitz, Christian, 9020 Klagenfurt (AT)
(72) Erfinder: Kruschitz, Christian, 9020 Klagenfurt (AT)
(74) Vertreter: Hehenberger, Reinhard

(56) Entgegenhaltungen:
- WO-A1-2005/048799
- DE-U1- 8 801 525
- DE-U1-202004 021 276
- US-A- 4 041 964

## Beschreibung

Die Erfindung betrifft eine Zusatzarbeitsplatte mit den Merkmalen des einleitenden Teils von Anspruch 1.

Zusatzarbeitsplatten sind in verschiedenen Ausführungsformen bekannt.

Aus der DE 20 2004 021 276 U1 ist eine Arbeits- und Schneidplatte für Küchen bekannt, die so ausgestaltet ist, dass sie über ein Kochfeld, eine Spüle oder eine Arbeitsplatte der Küche verschiebbar ist, um in der Küche einen vergrößerten Arbeitsbereich zu erhalten. Nachteilig bei dieser bekannten Zusatzarbeitsplatte ist es, dass sie ausschließlich als Arbeitsplatte geeignet ist und keine zusätzlichen Funktionen hat, insbesondere kein herausnehmbares Schneidbrett, keinen herausnehmbaren Ablageteil für Küchenutensilien, keinen Küchentuchhalter und auch keinen Führungsanschlag aufweist.

Verschiebbare Schneidbretter benötigen Führungen, die beispielsweise bei Küchenspülen zu finden sind. In der Regel sind dafür nur Schneidbretter geeignet, die vom Hersteller der Spüle selbst stammen. Der Verschiebebereich beschränkt sich auf die Spüle selbst. Bei diesen bekannten Schneidbrettern ist es erforderlich, dass die Spüle mit Führungen ausgebildet ist. Sofern dies nicht der Fall ist, muss eine Spüle eingebaut werden, die Führungen aufweist, wenn das bekannte Schneidbrett verwendet werden soll.

Weiters sind Schneidbretter bekannt, die ähnlich wie eine Schublade aus einem Küchenunterkasten herausziehbar sind. Es sind auch Schneidbretter bekannt, in die auf verschiedene Weise Auffangbehälter, Messer, Reiben, Siebe oder Brotdosen integriert sein können.

Des Weiteren sind Schneidbretter bekannt, die mit Abstand über einer Arbeitsplatte angeordnet sind, sodass unter Ihnen Auffangschalen angeordnet werden können.

Schneidbretter, die nicht in ein Spülensystem integriert sind, sind auch nicht längs der Arbeitsfläche verschiebbar, haben oft keinen Ablagebereich für Küchenwerkzeuge (ausgenommen Messer) oder keinen Küchentuchhalter.

Nachteilig bei bekannten Zusatzarbeitsplatten ist auch, dass sie nur über der Spüle oder dem Kochfeld einsetzbar sind, nicht aber über beidem.

Der Erfindung liegt die Aufgabe zugrunde, eine Zusatzarbeitsplatte zur Verfügung zu stellen, dass einen platzsparenden, verschiebbaren, ergonomischen und variablen Arbeitsplatz bildet, der einfach und ohne weitere Montagearbeiten auf einer Küchenarbeitsplatte angeordnet werden kann.

Gelöst wird die Aufgabe erfindungsgemäß mit einer Zusatzarbeitsplatte, welche die Merkmale von Anspruch 1 aufweist.

Bevorzugte und vorteilhafte Ausgestaltungen der Erfindung sind Gegenstand der Unteransprüche.

Gemäß der Erfindung ist die Zusatzarbeitsplatte mit Rollen ausgestattet, die dazu dienen, das Küchenschneidbrett verschiebbar zu machen.

In einer Ausführungsform kann die erfindungsgemäße Zusatzarbeitsplatte einen Küchentuchhalter aufweisen.

Von Vorteil ist es bei der Erfindung, dass die Zusatzarbeitsplatte zusätzlich zu den Rollen mit Stoppern und/oder einem Führungsanschlag ausgebildet sein kann. So wird verhindert, dass das Küchenschneidbrett unbeabsichtigt über die Arbeitsplatte hinaus verschoben wird.

In einer Ausführungsform kann die erfindungsgemäße Zusatzarbeitsplatte einen Ablageteil, in dem ein Messerblock und/oder Aufnahmebehälter für Küchenutensilien u. dgl. vorgesehen sein kann, besitzen. Der Ablageteil kann in einer bevorzugten Ausführungsform von der Zusatzarbeitsplatte abgenommen und nach Drehen um 180° um eine lotrechte Achse wieder eingesetzt werden. Der in dem Ablageteil vorgesehene Messerblock kann in den Ablageteil in verschiedene Richtungen weisend eingesetzt werden.

Vorteile der Zusatzarbeitsplatte gemäß der Erfindung, die beispielsweise als Küchenschneidbrett mit Zusatzfunktionen ausgebildet ist, sind je nach Ausführungsform folgende:

Die Zusatzarbeitsplatte mit Rollen kann von einer Arbeitsplatte einer Küche über einen Spülenbereich oder über ein Kochfeld geschoben werden, sodass ein zusätzlicher Arbeitsbereich besteht. Dies stört nicht da, die Spüle oder das Kochfeld bei Kochvorbereitungen in der Regel nicht benötigt werden.

Die Zusatzarbeitsplatte der Erfindung ergibt in einer möglichen Ausführungsform als Küchenschneidbrett einen äußerst kompakten Arbeitsbereich, in dem alles in Reichweite ist: Küchenwerkzeug, Schneidbrett und Geschirrtuch.

Der Platz über der Spüle ist am günstigsten, denn hier befindet sich in der Regel unmittelbar in der Nähe eine Waschgelegenheit und auch ein Abfalleimer.

Die Erfindung gestattet es, die Zusatzarbeitsplatte so auszubilden, dass es auf möglichst viele Ausführungsformen von Küchen-Arbeitsplatten, Spülen und Herde passt.

Die Achsen der erfindungsgemäß vorgesehenen Rollen sind in einem Winkel von 90° zur Verschieberichtung ausgerichtet, wodurch die erfindungsgemäße Zusatzarbeitsplatte entlang der Arbeitsplatte geführt wird, wobei durch die Rollen und einen gegebenenfalls vorhandenen Führungsanschlag Bewegungen quer zur Längserstreckung der Arbeitsplatte verhindert werden können.

Nachdem die erfindungsgemäße Zusatzarbeitsplatte, insbesondere in ihrer Ausführungsform als Küchenschneidbrett, auf eine Küchenarbeitsplatte aufgesetzt worden ist, ist die Arbeitsfläche der Zusatzarbeitsplatte (um wenige Zentimeter) höher als die Arbeitsplatte, was für ein ergonomisches Arbeiten (weniger gebückte Haltung) von Vorteil ist. Die Anordnung der Zusatzarbeitsplatte höher als eine Küchenarbeitsplatte erlaubt es auch, dass seitlich der Zusatzarbeitsplatte ein Teller und/oder ein Behälter angeordnet werden kann. So kann beispielsweise auf dem Schneidbrett erzeugtes Schnittgut problemlos unmittelbar in den Teller und/oder Behälter geschoben werden.

Wenn das Schneidbrett der erfindungsgemäßen Zusatzarbeitsplatte in ihrer Ausführungsform als Küchenschneidbrett (gegebenenfalls einhändig) herausnehmbar ist, und beispielsweise aus Kunststoff besteht ergeben sich zwei weitere Vorteile, nämlich, einmal eine leichte Reinigung durch Handwäsche oder in einer Geschirrspülmaschine oder es ist möglich, mit dem Schneidbrett und darauf angeordnetem Schnittgut direkt zu einer weiteren Arbeitsstelle, z.B. zu einem Kochfeld, zu gehen und das Schnittgut in einen Topf/Pfanne zu geben.

Der Ablageteil mit dem Messerblock und einem Behälter für Küchenutensilien oder Ähnliches ist bevorzugt herausnehmbar angeordnet, sodass er in einer um eine lotrechte Achse um 180° gedrehte Stellung (also seitenverkehrt zur ursprünglichen Lage) wieder eingesetzt werden kann. So ist es möglich den durch die erfindungsgemäße Zusatzarbeitsplatte gebildeten Arbeitsplatz wahlweise als Arbeitsplatz für Rechtshänder oder für Linkshänder anzupassen.

Wenn an der erfindungsgemäßen Zusatzarbeitsplatte ein Küchentuch- oder Handtuchhalter vorgesehen ist, ist ein Küchentuch und/oder ein Handtuch immer in Reichweite, was oft von Vorteil ist.

In einer Ausführungsform ist an der erfindungsgemäßen Zusatzarbeitsplatte eine bewegliche Griffsicherung vorgesehen. Wenn an der Griffsicherung (quer zur Verschieberichtungdes Küchenschneidbrettes) gezogen wird - beispielsweise durch ein Kind -, ergibt sich ein Klemmen des Küchenschneidbrettes an der Arbeitsplatte, sodass das Küchenschneidbrett nicht unerwünscht von der Arbeitsplatte heruntergezogen werden kann (Kindersicherung). Diese Sicherung durch Festklemmen des Küchenschneidbrettes an der Arbeitsplatte kann auch für bestimmte Arbeitsvorgänge von Vorteil sein.

Weitere Einzelheiten, Vorteile und Merkmale der Erfindung ergeben sich aus der nachstehenden Beschreibung bevorzugter Ausführungsbeispiele unter Bezugnahme auf die Zeichnungen.

### Es zeigt:

- Fig. 1: eine erfindungsgemäße Zusatzarbeitsplatte in Schrägansicht von unten,
- Fig. 2: das Küchenschneidbrett aus Fig. 1 in Schrägansicht von oben,
- Fig. 3: eine Ausführungsform mit Griffsicherung,
- Fig. 4: eine Einzelheit der Griffsicherung von Fig. 3 und
- Fig. 5: die Anordnung des Küchenschneidbrettes gemäß Fig. 1 und 2 an einer Arbeitsplatte im Bereich einer Spüle.

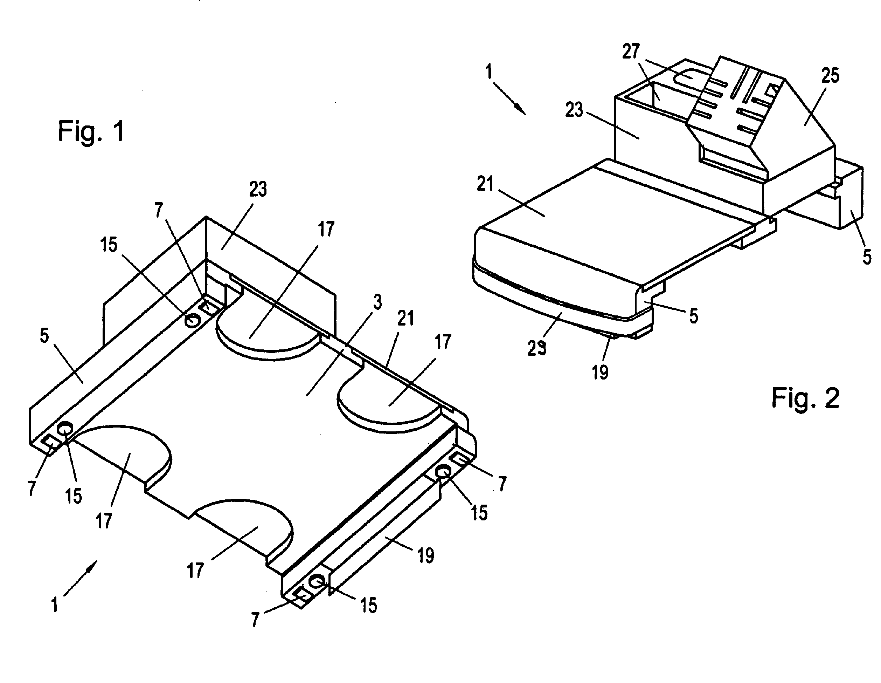

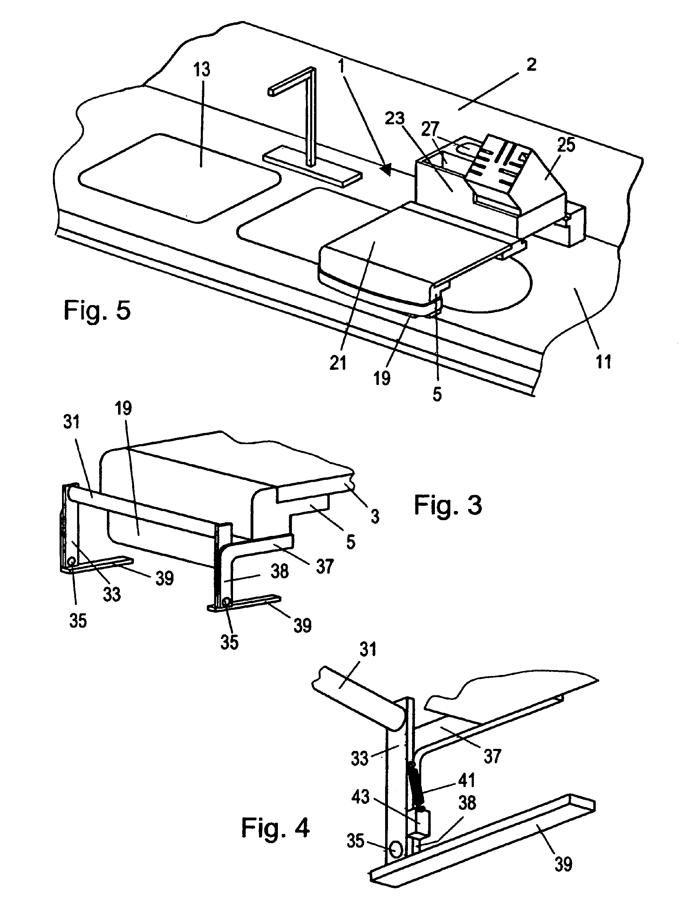

In der in den Figuren 1 und 2 gezeigten Ausführungsform der Zusatzarbeitsplatte ist diese ein Küchenschneidbrett 1 das einen Basisteil 3 besitzt. An dem Basisteil 3 sind an nach unten abstehenden Randleisten 5 desselben Rollen 7 um Achsen, die quer zur Schieberichtung , also quer zur Längserstreckung der Randleisten 5, ausgerichtet sind, drehbar gelagert. Über die Rollen 7 kann das Küchenschneidbrett 1 entlang einer Arbeitsplatte 11, z.B. entlang einer Arbeitsplatte 11 im Bereich einer Spüle 13 über die Spüle 13 und von dieser wieder weg bewegt werden (Fig. 5). Wie insbesondere aus Fig. 1 ersichtlich, sind an den nach unten weisenden Teilen des Basisteils 1 neben den Rollen 7 Stopper 15 aus weichem, gegenüber Küchenplatten 11 hohe Reibung aufweisendem Werkstoff vorgesehen, die über die Unterseite der Randleisten 5 des Basisteils 3 weniger weit vorstehen als die Rollen 7. Die Stopper 15 haben den Effekt, dass das Herunterrollen des Küchenschneidbrettes 1 über eine Arbeitsplatte 11 hinaus vermieden wird. Sobald nämlich Rollen 7 aus dem Bereich der Arbeitsplatte 11 gelangen, liegen Stopper 15 auf der Arbeitsplatte 11 auf und ein weiteres Verschieben des Küchenschneidbretts 1 ist unbeabsichtigt oder mit üblichem Kraftaufwand nicht mehr möglich.

An der in Gebrauchslage im Bereich des vorderen Randes einer Arbeitsplatte 11 angeordneten Randleiste 5 ist nach unten abstehend eine Führungsleiste 19 vorgesehen. Diese Führungsleiste 19 führt in Kombination mit den Rollen 7 das Küchenschneidbrett 1 entlang der Arbeitsplatte 11, wobei sich die Führungsleiste 19 am vorderen Rand der Arbeitsplatte 11 entlang bewegt. Als Führung kann alternativ auch eine rückwärtige Wand 2 des Arbeitsplatzes dienen.

Im Basisteil 3 sind im gezeigten Ausführungsbeispiel halbkreisförmige Ausschnitte 17 vorgesehen, durch welche ein Schneidbrett 21 sowie ein Aufnahmeteil 23, die am Basisteil 3 vorgesehen sind, leichter herausgenommen werden können. Da das Schneidbrett 21 bevorzugt herausnehmbar ist, kann es zum Reinigen oder zum Transportieren von Schneidgut zu einer weiteren Arbeitsstelle, z.B. zu einem Herd, auf dem ein Topf oder eine Pfanne steht, von dem Küchenschneidbrett 1 abgenommen werden.

Auf dem Basisteil 3 ist neben dem Schneidbrett 3 ein Aufnahmeteil 23 vorgesehen. Der Aufnahmeteil 23 enthält im gezeigten Ausführungsbeispiel einen Messerblock 25 und neben diesem Behälter 27 für Küchenutensilien, Gewürzen oder Ähnliches. In dem Aufnahmeteil 23 können beliebige Behälter 27 eingesetzt werden.

Der Aufnahmeteil 23 ist vom Basisteil 3 abnehmbar, und kann in einer vertikalen Achse um 180° verdrehten Lage wieder auf den Basisteil 3 aufgesetzt werden. In diesem Fall würde sich der Messerblock 25 auf der anderen Seite des Basisteils 3 befinden, als in Fig. 2 und 5 dargestellt. Der Messerblock 25 kann aus dem Aufnahmeteil 23 abgenommen und um eine vertikale Achse um 180° gedreht wieder eingesetzt werden.

An dem Aufnahmeteil 23 gegenüberliegenden Rand des Basisteils 3, insbesondere der Randleiste 5, ist in den Fig. 1 und 2, sowie Fig. 5 gezeigten Ausführungsbeispiel eine Halterung 29 in Form eines Bügels für ein Geschirrtuch, ein Handtuch oder Ähnliches, vorgesehen. Diese Halterung 29 ist im gezeigten Ausführungsbeispiel an der vorderen Seite der nach unten weisenden Randleiste 5 des Basisteils 3 angebracht.

In der Praxis kann der Basisteil 3 sowie seine nach unten weisenden, die Rollen 7 und die Stopper 15 tragenden Randleisten 5 aus Metall, insbesondere rostfreiem Stahlblech, gefertigt sein. Dabei ist auch eine Ausführungsform in Betracht gezogen, bei der die beiden nach unten weisenden, die Rollen 7 und die Stopper 15 tragenden Randleisten 5 miteinander durch einen Steg (Metallblechprofil) verbunden sind. Zur Abstützung des Schneidbrettes 21 kann in der Mitte des Steges eine quer zum Steg ausgerichtete Stütze (parallel zu den nach unten weisenden Randleisten 5 des Basisteils 3) vorgesehen sein.

Auch der Ablageteil 23 kann aus beliebigem Werkstoff bestehen, wobei rostfreier Stahl (Stahlblech) in Betracht gezogen ist.

Bei der in den Fig. 3 und 4 gezeigten Ausführungsform ist dem erfindungsgemäßen Küchenschneidbrett 1 eine Sicherung zugeordnet. Diese Sicherung besteht aus einem Griff 31, der über nach unten weisende Schenkel 33 über Schwenklager 35 an U-förmigen an dem Basisteil 3 befestigten Trägern 37 schwenkbar ist. Mit den Schenkeln 33 des Griffes 31 sind Arme 39 verbunden. Beim Ziehen an der Griffstange 31 von dem Küchenschneidbrett 1 weg, wird die Griffstange 31 so verschwenkt, dass die Arme 39 von unten an dem überstehenden Teil einer Küchenarbeitsplatte 11 zur Anlage kommen und das Küchenschneidbrett 1 an dieser klemmend festlegen.

In Fig. 4 sind zum Rückholen des Griffs 31 Zugfedern 41, im gezeigten Ausführungsbeispiel Zugschraubenfedern, vorgesehen, die zwischen den Armen 39, an welchen der Griff 31 befestigt ist einerseits, und nach unten weisenden Schenkeln 38 der Träger 37 anderseits, gespannt sind. Für die lotrechte Positionierung des Griffs 31 wäre anstatt einer Feder 41 auch eine Ausführung mit Magneten denkbar. Weiters ist wenigstens ein Anschlag 43 vorgesehen, der an einem Schenkel 38 befestigt ist und der die Grundstellung des Griffs 31 bestimmt.

Auch in dieser Ausführungsform kann der Griff 31 als Halterung für Tücher, wie Geschirrtücher, Handtücher oder Ähnliches dienen.

Zusammenfassend kann ein Ausführungsbeispiel der Erfindung wie folgt beschrieben werden.

Eine als Küchenschneidbrett 1 ausgebildete Zusatzarbeitsplatte ist über Rollen 7 auf einer Arbeitsplatte entlang derselben verschiebbar. Mit dem können Arbeitsabläufe (Kochvorbereitungen) effizient gestaltet werden. Es lässt sich über dem Spülen- oder Herdbereich platzsparend positionieren.

Das Küchenschneidbrett 1 besitzt einen Basisteil 3 mit einem herausnehmbaren Schneidbrett 21, einem Küchentuchhalter 29, variablen, herausnehmbaren und um eine vertikale Achse um 180° gedreht positionierbaren Ablageteilen 23 und einen Messerblock 25.

## Patentansprüche

1. Zusatzarbeitsplatte (1) mit Rollen (7) auf denen die Zusatzarbeitsplatte (1) verschiebbar geführt ist, **dadurch gekennzeichnet, dass** die Zusatzarbeitsplatte (1) einen Führungsanschlag (19) aufweist, der in Gebrauchslage dem Rand einer Arbeitsplatte (11) zum Führen der Zusatzarbeitsplatte (1) zugeordnet ist, und dass neben den Rollen (7) Stopper (15) vorgesehen sind, die in der Zusatzarbeitsplatte (1) weniger weit vorstehen, als die Rollen (7).

2. Zusatzarbeitsplatte nach Anspruch 1, **dadurch gekennzeichnet, dass** die Zusatzarbeitsplatte (1) auf einem Basisteil (3) aufliegend ein Schneidbrett (21) aufweist.

3. Zusatzarbeitsplatte nach Anspruch 2, **dadurch gekennzeichnet, dass** Schneidbrett (21) auf dem Basisteil (3) herausnehmbar aufgelegt ist.

4. Zusatzarbeitsplatte nach einem der Ansprüche 1 bis 3, **dadurch gekennzeichnet, dass** auf der Zusatzarbeitsplatte (1) ein Ablageteil (23) mit Messerblock (25) und Aufnahmeraum (27) für Küchenutensilien vorgesehen ist.

5. Zusatzarbeitsplatte nach Anspruch 4, **dadurch gekennzeichnet, dass** der Ablageteil (23) mit dem Messerblock (25) am Basisteil (3) der Zusatzarbeitsplatte (1) herausnehmbar angeordnet ist.

6. Zusatzarbeitsplatte nach Anspruch 5, **dadurch gekennzeichnet, dass** der Ablageteil (23) wahlweise in einer von zwei zueinander um eine vertikale Achse um 180° verdrehten Stellungen an der Zusatzarbeitsplatte (1) aufsetzbar ist.

7. Zusatzarbeitsplatte nach einem der Ansprüche 4 bis 6, **dadurch gekennzeichnet, dass** der Messerblock (25) wahlweise in einer von zwei zueinander um eine vertikale Achse um 180° verdrehten Stellungen am Ablageteil (23) einsetzbar ist.

8. Zusatzarbeitsplatte nach einem der Ansprüche 2 bis 7, **dadurch gekennzeichnet, dass** am Basisteil (3) eine Halterung (29) für Tücher vorgesehen ist.

9. Zusatzarbeitsplatte nach einem der Ansprüche 1 bis 8, **dadurch gekennzeichnet, dass** an der Zusatzarbeitsplatte (1) verschwenkbar ein Griff (31) angeordnet ist und dass der Griff (31) mit Klemmarmen (39) verbunden ist.

10. Zusatzarbeitsplatte nach Anspruch 9, **dadurch gekennzeichnet, dass** der Griff (31) an Schenkeln (38) von am Basisteil (3) angeordneten U-förmigen Trägem (37) verschwenkbar gelagert ist.

11. Zusatzarbeitsplatte nach Anspruch 9 oder 10, **dadurch gekennzeichnet, dass** der Griff (31) mit Schenkeln (33) verbunden ist, und dass die Klemmarme (39) mit den Schenkeln (33) verbunden sind.

## Claims

1. An additional worktop (1) comprising rollers (7) on which the additional worktop (1) is displaceably guided, **characterized in that** the additional worktop (1) comprises a guide stop (19) which in the position of use is associated with the edge of a worktop (11) for guiding the additional worktop (1) and **in that** stoppers (15) are provided adjacent to the rollers (7), said stoppers protruding in the additional worktop (1) to a lesser extent than the rollers (7).

2. The additional worktop according to Claim 1, **characterized in that** the additional worktop (1) has a cutting board (21) bearing against a base part (3).

3. The additional worktop according to Claim 2, **characterized in that** the cutting board (21) is positioned on the base part (3) so as to be removable.

4. The additional worktop according to one of Claims 1 to 3, **characterized in that** a storage part (23) with a knife block (25) and a receiver space (27) for kitchen utensils are provided on the additional worktop (1).

5. The additional worktop according to Claim 4, **characterized in that** the storage part (23) is arranged with the knife block (25) on the base part (3) of the additional worktop (1) so as to be removable.

6. The additional worktop according to Claim 5, **characterized in that** the storage part (23) may be optionally positioned in one of two positions on the additional worktop (1), rotated by 180° relative to one another about a vertical axis.

7. The additional worktop according to one of Claims 4 to 6, **characterized in that** the knife block (25) may be optionally used in one of two positions on the storage part (23), rotated by 180° relative to one another about a vertical axis.

8. The additional worktop according to one of Claims 2 to 7, **characterized in that** a holder (29) for cloths is provided on the base part (3).

9. The additional worktop according to one of Claims 1 to 8, **characterized in that** a handle (31) is pivotably arranged on the additional worktop (1) and **in that** the handle (31) is connected to clamping arms (39).

10. The additional worktop according to Claim 9, **characterized in that** the handle (31) is pivotably mounted on limbs (38) of U-shaped supports (37) arranged on the base part (3).

11. The additional worktop according to Claim 9 or 10, **characterized in that** the handle (31) is connected to limbs (33) and **in that** the clamping arms (39) are connected to the limbs (33).

## Revendications

1. Plateau de travail supplémentaire (1) comprenant des rouleaux (7) sur lesquels le plateau de travail supplémentaire (1) est conçu de manière à pouvoir être poussé, **caractérisé en ce que** le plateau de travail supplémentaire (1) présente une butée de guidage (19), laquelle en utilisation est attribuée à un bord d'un plateau de travail (11) pour guider le plateau de travail supplémentaire (1), et **en ce qu'**à côté des rouleaux (7), des butées (15) sont prévues qui font saillie moins un peu loin dans le plateau de travail supplémentaire (1), que les rouleaux (7).

2. Plateau de travail supplémentaire (1) selon la revendication 1, **caractérisé en ce que** le plateau de travail supplémentaire (1) présente une planche à découper (21) reposant sur une partie de socle (3).

3. Plateau de travail supplémentaire (1) selon la revendication 2, **caractérisé en ce que** la planche à découper (21) est conçue pour pouvoir être enlevée de la partie de socle (3).

4. Plateau de travail supplémentaire (1) selon l'une des revendications 1 à 3, **caractérisé en ce qu'**une partie de rangement (23) avec bloc à couteaux (25) et espace de réception (27) pour des ustensiles de cuisine est prévue sur le plateau de travail supplémentaire (1).

5. Plateau de travail supplémentaire (1) selon la revendication 4, **caractérisé en ce que** la partie de rangement (23) avec le bloc à couteaux (25) est disposée de manière amovible sur la partie de socle (3) du plateau de travail supplémentaire (1).

6. Plateau de travail supplémentaire (1) selon la revendication 5, **caractérisé en ce que** la partie de rangement (23) peut être placée au choix sur le plateau de travail supplémentaire (1) dans une position de deux positions tournées l'une par rapport à l'autre de 180° sur un axe vertical.

7. Plateau de travail supplémentaire (1) selon l'une des revendications 4 à 6, **caractérisé en ce que** le bloc à couteaux (25) peut être utilisé au choix sur la partie de rangement (23) dans une position de deux positions tournées l'une par rapport à l'autre de 180° sur un axe vertical.

8. Plateau de travail supplémentaire (1) selon l'une des revendications 2 à 7, **caractérisé en ce qu'**un crochet pour torchons (28) est prévu sur la partie de socle (3).

9. Plateau de travail supplémentaire (1) selon l'une des revendications 1 à 8, **caractérisé en ce qu'**une poignée (31) est disposée pivotante sur le plateau de travail supplémentaire (1) et que la poignée (31) est reliée à des bras de serrage (39).

10. Plateau de travail supplémentaire (1) selon la revendication 9, **caractérisé en ce que** la poignée (31) est disposée pivotante sur des branches (38) de supports (37) en U disposés sur la partie de socle (3).

11. Plateau de travail supplémentaire (1) selon la revendication 9 ou 10, **caractérisé en ce que** la poignée (31) est reliée à des branches (33) et que les bras de serrage (39) sont reliés aux branches (33).
